Europäisches Patentamt

European Patent Office

Office européen des brevets

(19)

(11) Publication number: **0 251 747**

**A1**

(12) **EUROPEAN PATENT APPLICATION**

(21) Application number: **87305736.8**

(22) Date of filing: **26.06.87**

(51) Int. Cl.⁴: **H 04 M 19/08**

(30) Priority: **27.06.86 GB 8615781**

(43) Date of publication of application:
**07.01.88 Bulletin 88/01**

(84) Designated Contracting States:
**AT BE CH DE ES FR GB GR IT LI LU NL SE**

(71) Applicant: **BRITISH TELECOMMUNICATIONS PUBLIC LIMITED COMPANY**
**81 Newgate Street**
**London EC1A 7AJ (GB)**

(72) Inventor: **Guard, David Robert**
**42 Manor Road**
**Martlesham Heath Suffolk, IP5 7SY (GB)**

(74) Representative: **Pureii, Kevin John et al**
**British Telecom Intellectual Property Unit 13th Floor 151 Gower Street**
**London WC1E 6BA (GB)**

(54) **Power recovery and line driving circuit.**

(57) A voltage regulating power supply 23 is connected in series with an ac load 22 between two wires 1 and 3 of a telephone line. A dc load 21 comprising a simulated inductance is connected by a switch 24: either, in parallel only with the ac load 22; or, when the line voltage V1 drops threatening to prevent operation of the simulated inductance, in parrallel with both the voltage regulator 23 and the ac load 22. The use of one simulated inductance switched between two modes of operation gives the advantage that a transistor TR1 within the simulatd inductance is always ON and can be used to drive signals onto the telephone line ZL.

Fig. 4

**Description**

## POWER RECOVERY AND LINE DRIVING CIRCUIT

This invention relates to a power recovery and line driving circuit, connected in use between first and second lines which provide both alternating and direct current, in which a voltage regulating power supply operates, in association with a series ac load and a dc load consisting of a simulated inductance. In particular, but not exclusively, such circuits are used between the two lines of a telephone wire at the customer apparatus.

Two arrangements are currently emloyed: A 'series' configuration, which extracts direct current, comprising the power supply connected in series with the ac load between the two lines and the dc load connected in parallel with the ac load; and a 'parallel' configuration, which extracts direct voltage, comprising the power supply connected in series with the ac load between the two lines and the dc load connected in parallel with them both between the two lines.

The dc load comprises an inductance which is simulated by active components since an inductive winding would be of impractical size. Such simulated inductances require a minimum voltage across their terminals in order to act as inductances, and act as impedances when insufficient voltage is available.

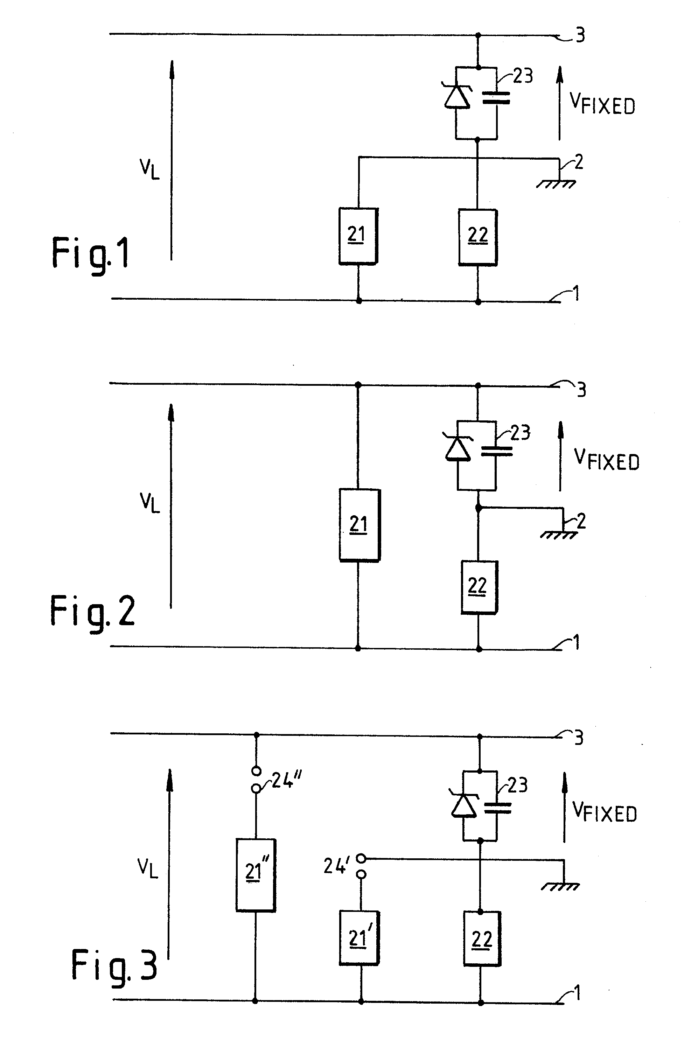

In the 'series' configuration, illustrated in figure 1, maximum current flows through the voltage regulating circuit 23, that is, the sum of the currents through both the ac load 22 and dc load 21. However the disadvantage is that when the ac component of the line voltage V1 swings to a high negative amplitude, the voltage available to the simulated inductance 21 may become insufficient. The simulated inductance then becomes an unwanted parallel impedance across the lines 1-3. (An alternative 'series' arrangement may put the ac load directly across the line).

The 'parallel' configuration, illustrated in figure 2, avoids this problem but fails to maximise the current flowing through the voltage regulator; it is limited by the resistance of the ac load.

It is known, for example see EP-A-O 023 714, to be able to obtain the advantages of both the 'series' and 'parallel' configurations by switching between the two arrangements as the instantaneous line voltage falls and rises. Figure 3 illustrates this idea:

The voltage regulator 23 and ac load 22 are still connected in series between the lines 1 and 3 but either the simulated inductance 21' is connected by means of switch 24' in parallel only with the ac load 22, or alternatively, the simulated inductance 21" is connected by means of switch 24" in parallel with both the voltage regulator 23 and the ac load 22. In normal operation the simulated inductance 21' is connected in parallel with the ac load 22, ie the 'series' configuration.

When the line voltage V1 drops, for instance as a result of a high negative excursion of the ac component, the switch 24' automatically discon-nects simulated inductance 21' from the 'series' configuration and the switch 24" connects simulated inductance 24" in to the 'parallel' configuration.

When the line voltage rises again the switch 24' reconnects simulated inductance 21' in the 'series' configuration.

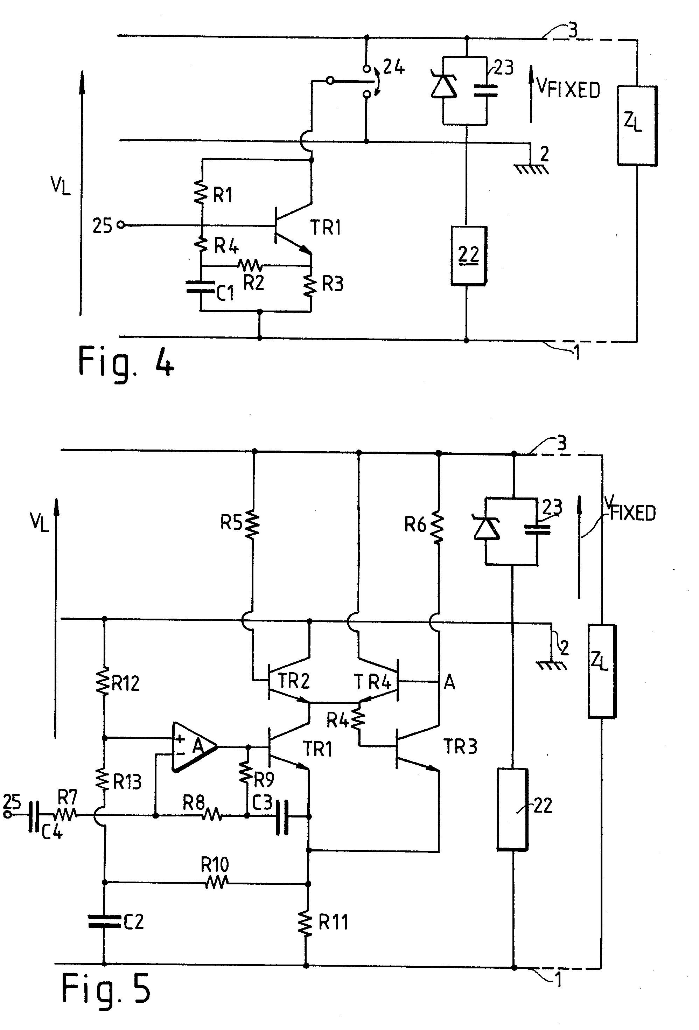

The invention will now be described by way of example with reference to figures 4 and 5 of the accompanying drawings in which:

Figure 4 illustrates a circuit embodying the principle of the invention; and

Figure 5 illustrates a preferred embodiment of the invention.

Referring now to figure 4 the dc load is shown as the simple simulated inductance comprising TR1, R1, R2, R3, R4 and C1, which will act like an inductance provided about one volt is available across its terminals. In normal operation it is connected, via switch 24, in parallel with ac load 22. When the line voltage V1 drops, for instance as a result of a high negative excursion of the ac component, the switch 24 automatically disconnects the simulated inductance 21 from the 'series' configuration and reconnects it into the 'parallel' configuration.

When the line voltage rises again the switch 24 reconnects the simulated inductance in the 'series' configuration.

Thus the invention while only requiring one dc load circuit enjoys the advantages of the 'parallel' configuration in that the simulated inductance never fails to operate as such, while for most of the time it also enjoys the advantages of the 'series' configuration. The invention also enjoys a further advantage as a result of requiring only one simulated inductance: namely, since the simulated inductance includes a transistor TR1 that is always ON this transistor can also be simultaneously used as a line driver to drive ac signals onto the remote telephone line, represented by ZL. Speech or data may be injected via input port 25 on to the base of TR1.

The signal is then amplified and may be fed onto the line 3. In this case when the simulated inductance is in the 'series' configuration, the signal is driven onto the line 3 via the power supply 23 and when the simulated inductance is in the 'parallel' configuration the signal is driven directly onto the line.

Referring now to figure 5 a preferred embodiment will be described; the same reference numerals as in figure 4 have been used to identify the corresponding elements where it is convenient to do so. The simulated inductance is again implemented by TR1 and its associated elements, but the operation of the inductor is enhanced by placing TR1 inside the feedback loop of an operational amplifier A via capacitor C3 and resistor R8.

The switch (24 of figure 7) is implemented by transistors TR2, TR3 and TR4 together with their associated resistors R4, R5 and R6. In normal opeation TR2 is hard ON and the circuit arranged i the 'series' configuration. TR1 simulates inductance, and TR3 is hard ON, while TR4 is hard OFF.

When the line voltage V1 drops, the voltage at the collector voltage of TR1, falls; R4 is such that TR3 starts to turn OFF preventing TR1 saturation. As TR3 turns OFF the voltage at point A rises and TR4 turns ON. TR4 turning ON diverts emitter current from TR2 so that the emitter is at a higher potential than the collector and the collector of TR1 is switched from line 2 towards line 3. In fact, as TR4 turns ON it assists TR1 in simulating inductance.

When the line voltage V1 rises TR3 turns back ON and TR4 OFF and TR2 back ON.

The line driver operation involves applying signals, via input port 25, C4 and R7, to the inverting input of the operational amplifier A. The signal may be applied with respect to line 1 if R13 is zero. The operational amplifier then functions as a conventional "virtual earth" amplifier with TR1 acting as an emitter follower. The gain from the input to the emitter of TR1 being R8/R7. Alternatively the circuit values may be chosen so that the ac signal is inserted with respect to line 2. In this instance the amplifier is a differential type where the gain to the emitter of TR1 is R13/R12 = R8/R7. The dc voltage drop across ac load 22 is I*R11 + Vbe* (FV2+R13+R10)/(R13+R10), where Vbe is the dc voltage across the base emitter junction of TR1 and I the the dc current through R11.

The voltage developed across the emitter resistor of TR1 may be used for negative feedback to remove crossover distortion between the modes of operation. It should be appreciated that many other embodiments of the switch and simulated inductance are possible, and fall within the scope of the invention. In particular, where single transistors have been shown, darlington pairs could be used; also the resistor R4 could be connected to the collector rather than the emitter of transistor TR2. It should also be appreciated that the ac load 22 could be connected directly between lines 1 and 3 without affecting the operation of the remainder of the circuit.

The circuit is useful for providing voltage regulated power from a telephone line to a telephone instrument, and in addition for simultaneously applying voice or data signals back onto the telephone line. It is particularly important for feature telephones, eg loudspeaking telephones, that maximum volts and amps (ie maximum power) are available, as a result of their increased power requirement.

## Claims

1. A power recovery and line driving circuit, connected in use between first (3) and second (1) lines which provide both alternating and direct current, in which a voltage regulating power supply (23) operates in association with a series ac load (22), and a dc load (21) consisting of a simulated inductance; characterised in that the simulated inductance is connected, by means of a switch (24):
either when the switch (24) is in a first state in parallel only with the ac load (22);
or, when the line voltage (V1) falls below a threshold, and the switch is in a second state in parallel with both the power supply (23) and the ac load (22);
and further characterised in that the simulated inductance (21) includes a transistor (TR1) by means of which signals may be applied to the lines (1, 3) regardless of the state of the switch (24).

2 A power recovery and line driving circuit as claimed in claim 1 characterised in that the base of said transistor (TR1) is connected to a signal input port (25) via an operational amplifier arrangement.

3. A power recovery and line driving circuit as claimed in claim 1 or claim 2 wherein the switch (24) comprises one or more active semiconductor devices (TR2, TR3, TR4), and automatically operates in response to excursions of the line voltage (V1) below the threshold to connect the simulated inductance (21) in parallel with both the power supply (23) and the ac load (22).

4. A power recovery and line driving circuit as claimed in claim 1, 2 or 3 wherein the simulated inductance has first and second terminals and comprises a first transistor (TR1) with the collector connected to the first terminal and the emitter connected to the second terminal; and the switch (24) comprises a second transistor (TR2) with its collector connected to the junction between the voltage regulator (23) and the ac load (22), its emitter connected to the first terminal of the inductance, and its base connected, in use, via a fourth resistor (R5), to the first line (3), a third transistor (TR4) with its collector connected to the first line (3), its base connected via a fifth resistor (R6) to the first line, and its emitter connected to the first terminal of the inductance, and a fourth transistor (TR3) with its collector connected to the base of the third transistor (TR4) its emitter connected to the emitter of the first transistor (TR1) and its base connected via a sixth resistor (R4) to the first terminal of the inductance; and the second terminal of the inductance is connected to the second line (1), the terminal of the voltage regulator (23) remote from said junction is connected to the first line (3), and the terminal of the ac load (22) remote from said junction is connected to the second line (1).

0251747

Fig.1

Fig.2

Fig.3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 023 714  (LICENTIA) <br> * Page 5, lines 6-20,28 - page 6, line 17; page 7, lines 1-9 * | 1,3 | H 04 M   19/08 |
| A | | 4 | |
| | --- | | |
| X | DE-A-3 029 895  (LICENTIA) <br> * Abstract * | 1,3 | |
| A | | 4 | |
| | --- | | |
| X | EP-A-0 107 133  (LICENTIA) <br> * Abstract * | 1-3 | |
| A | | 4 | TECHNICAL FIELDS SEARCHED (Int. Cl.4) |
| | --- | | |
| A | EP-A-0 146 183  (R.T.C. LA RADIOTECHNIQUE-COMPELEC) <br> * Page 6, line 26 - page 7,  line 36 * | 1,3 | H 04 M |
| | ----- | | |

The present search report has been drawn up for all claims

| Place of search | Date of completion of the search | Examiner |
|---|---|---|
| THE HAGUE | 01-10-1987 | VERSLYPE J.P. |